# EUROPÄISCHE PATENTSCHRIFT

(11) **EP 3 765 751 B1**
(45) Veröffentlichungstag und Bekanntmachung des Hinweises auf die Patenterteilung: **06.04.2022**
(21) Anmeldenummer: 19706956.0
(22) Anmeldetag: 20.02.2019
(51) Int. Cl.: F16B 5/06

(54) **LÖSBARE FORMSCHLÜSSIGE VERBINDUNG ZWISCHEN EINEM ERSTEN KÖRPER UND EINEM ZWEITEN KÖRPER**
RELEASABLE INTERLOCKING CONNECTION BETWEEN A FIRST BODY AND A SECOND BODY
LIAISON PAR COMPLÉMENTARITÉ DE FORMES DÉTACHABLE ENTRE UN PREMIER CORPS ET UN DEUXIÈME CORPS

(30) Priorität: 14.03.2018 DE 102018105942
(43) Veröffentlichungstag der Anmeldung: 20.01.2021
(73) Patentinhaber: KNORR-BREMSE Systeme für Nutzfahrzeuge GmbH, 80809 München (DE)
(72) Erfinder: KARAGÖZ, Hasan-Özkan, 75175 Pforzheim (DE)
(86) Internationale Anmeldenummer: PCT/EP2019/054150
(87) Internationale Veröffentlichungsnummer: WO 2019/174873

(56) Entgegenhaltungen:
- EP-A1- 2 460 394
- EP-A1- 2 789 907
- WO-A1-2011/004823

## Beschreibung

Die Erfindung betrifft eine lösbare formschlüssige Verbindung zwischen einem ersten Körper und einem zweiten Körper, gemäß dem Oberbegriff von Anspruch 1. Weiterhin betrifft die Erfindung auch eine elektrische Verbindungseinrichtung beinhaltend wenigstens eine solche lösbare formschlüssige Verbindung gemäß Anspruch 8 sowie eine Magnetventileinrichtung beinhaltend wenigstens eine solche elektrische Verbindungseinrichtung gemäß Anspruch 9 wie auch eine elektropneumatische Einrichtung eines Fahrzeugs beinhaltend wenigstens eine solche Magnetventileinrichtung gemäß Anspruch 12.

Gattungsgemäße lösbare formschlüssige Verbindungen beispielsweise zwischen Gehäusebauteilen basieren auf einer Verrastung von Rastnasen an einem Gehäusebauteil mit entsprechenden Rastflächen an dem anderen Gehäusebauteil. EP 2 460 394 A1 beschreibt ein Gehäuse mit einer Verriegelungsstruktur. Zum Lösen der Verriegelung ist im Inneren des Gehäuses ein Lösewerkzeug vorgesehen. EP 2789907A1 beschreibt eine Beleuchtungseinrichtung. Bei der Montage der Beleuchtungseinrichtung wird eine Schraube mit einem Kopf in einer Tragfläche montiert. Bei einer fortschreitenden Bewegung der Beleuchtungseinrichtung biegt der Kopf des Befestigungselements ein elastisches Bauteil. Um die Beleuchtungseinrichtung zu demontieren, wird das elastische Bauteil über einen Kanal mit einem speziellen Schlüssel angehoben. WO 2011/004823A1 bezieht sich auf eine Struktur, die eine Klammer und ein Einsteckteil aufweist. Die Klammer ist in eine Aussparung eingepresst, wodurch verhindert wird, dass das Einsteckteil aus einem Inneren eines Rahmens herauskommt.

Der vorliegenden Erfindung liegt die Aufgabe zugrunde, eine lösbare formschlüssige Verbindung derart weiter zu entwickeln, dass sie mit einfachen Mitteln montier- und demontierbar ist. Weiterhin soll auch eine elektrische Verbindungseinrichtung beinhaltend wenigstens eine solche lösbare formschlüssige Verbindung sowie eine Magnetventileinrichtung beinhaltend wenigstens eine solche elektrische Verbindungseinrichtung wie auch eine elektropneumatische Einrichtung eines Fahrzeugs beinhaltend wenigstens eine solche Magnetventileinrichtung zur Verfügung gestellt werden.

Dese Aufgabe durch die Merkmale der Ansprüche 1, 8, 9 und 12 gelöst.

### Offenbarung der Erfindung

Die Erfindung stellt eine lösbare formschlüssige Verbindung zwischen einem ersten Körper und einem zweiten Körper zur Verfügung, welche wenigstens Folgendes beinhaltet:
a) Eine Linearführung zwischen dem ersten Körper und dem zweiten Körper, wobei die Linearführung in Eingriff und außer Eingriff bringbar ist,
b) wenigstens ein separates Sicherungselement, welches mit seinem einen Ende in wenigstens einer ersten Öffnung in dem ersten Körper oder in wenigstens einer dritten Öffnung in einem dritten Körper derart lösbar befestigt ist, dass das wenigstens eine separate Sicherungselement mit seinem anderen Ende aus der ersten Öffnung herausragt, und
c) wenigstens ein in Richtung der Längsachse des wenigstens einen separaten Sicherungselements durch das andere Ende des separaten Sicherungselements elastisch verformbarer Abschnitt des zweiten Körpers, welcher mit einer Anschlagfläche versehen ist, gegen welche in Richtung der Linearführung gesehen das andere Ende des separaten Sicherungselements anschlagbar ist, wobei
d) der wenigstens eine elastisch verformbare Abschnitt und das wenigstens eine separate Sicherungselement derart miteinander zusammen wirken, dass
e) zur Montage der lösbaren formschlüssigen Verbindung
   e1) zunächst die Linearführung zwischen dem ersten Körper und dem zweiten Körper in Eingriff gebracht, und dann
   e2) in einer ersten Montagephase der erste Körper relativ zum zweiten Körper entlang der Linearführung in einer Montagerichtung linear geführt wird, wobei der elastisch verformbare Abschnitt von dem anderen Ende des separaten Sicherungselements kontaktiert und in Richtung der Längsachse des separaten Sicherungselements elastisch verformt wird, solange bis
   e3) in einer zweiten Montagephase eine Montage-Endposition erreicht ist, in welcher das andere Ende des separaten Sicherungselements die Anschlagfläche passiert hat und dadurch der elastische Abschnitt zurückfedert sowie das andere Ende des separaten Sicherungselements die Anschlagfläche in Richtung der Linearführung gesehen formschlüssig hintergreift und dadurch einen Anschlag ausbildet, und dass
f) zur Demontage der lösbaren formschlüssigen Verbindung
   f1) zunächst das wenigstens eine separate Sicherungselement aus der wenigstens einen ersten Öffnung oder aus der wenigstens einen dritten Öffnung herausgelöst wird, und dann
   f2) der erste Körper gegenüber dem zweiten Körper entlang der Linearführung in einer der Montagerichtung entgegen gesetzten Demontagerichtung solange linear geführt wird, bis die Linearführung zwischen dem der ersten Körper und dem zweiten Körper außer Eingriff gerät.

Bedingt durch den Formschluss zwischen dem anderen Ende des separaten Sicherungselements, beispielsweise einer in die Öffnung eingeschraubten Kopfschraube und der Anschlagfläche kann sich die Verbindung nicht mehr von selbst lösen und bleibt solange gesichert, wie sich das separate Sicherungselement in der Öffnung befindet.

Mit diesen Mitteln ist eine einfache Montage und Demontage der lösbaren formschlüssigen Verbindung möglich.

Durch die in den Unteransprüchen aufgeführten Maßnahmen sind vorteilhafte Weiterbildungen und Verbesserungen des ersten Aspekts der Erfindung möglich.

Bevorzugt ist ein Konter-Anschlag zwischen dem ersten Körper und dem zweiten Körper vorgesehen, welcher in der Montage-Endposition eine Bewegung des anderen Endes des separaten Sicherungselements von der Anschlagfläche weg verhindert. Durch den Konter-Anschlag wird daher die lösbare formschlüssige Verbindung gesichert.

Gemäß einer bevorzugten Ausführungsform ist der elastisch verformbare Abschnitt als elastisch verformbare Lasche oder als elastisch verformbarer Finger ausgebildet, an deren oder an dessen freiem Ende die Anschlagfläche ausgebildet ist. Die Anschlagfläche verläuft insbesondere parallel zu einer Längsachse des wenigstens einen separaten Sicherungselements, das bevorzugt durch eine Kopfschraube gebildet wird, wobei dann der Schraubenkopf der Kopfschraube mit der Anschlagfläche formschlüssig zusammen wirkt.

Eine besonders einfache Herstellung ergibt sich, wenn insbesondere die elastisch verformbare Lasche oder der elastisch verformbare Finger zusammen mit dem zweiten Körper als einstückiger Kunststoff-Spritzgussformling ausgebildet ist.

Beispielsweise ist die Lasche oder der Finger des zweiten Körpers mit einer im Querschnitt gesehen als Rampe ausbildeten Kontaktfläche versehen, wobei im Laufe der ersten Montagephase das andere Ende des separaten Sicherungselements entlang der ansteigenden Rampe läuft und dadurch der Finger oder die Lasche von dem anderen Ende des separaten Sicherungselements in Richtung der Längsachse des Sicherungselements elastisch verformt wird.

Wie oben bereits angedeutet, ist das wenigstens eine separate Sicherungselement bevorzugt als Kopfschraube mit einem Schraubenkopf und einem Schraubenschaft ausgebildet ist, wobei das eine Ende des separaten Sicherungselements durch den Schraubenschaft gebildet wird, welcher bei der Montage mit einem Innengewinde der Öffnung verschraubt ist, und das andere Ende des separaten Sicherungselements durch den Schraubenkopf.

Bevorzugt kann die Linearführung zwischen dem ersten Körper und dem zweiten Körper wenigstens eine Führungsnut und wenigstens einen in die Führungsnut eingreifenden Führungskörper beinhalten, wobei die wenigstens eine Führungsnut an dem zweiten Körper und der wenigstens eine Führungskörper an dem ersten Körper oder die wenigstens eine Führungsnut an dem ersten Körper und der wenigstens eine Führungskörper an dem zweiten Körper ausgebildet ist. Dabei ist jegliche Art von Nutführung denkbar, beispielsweise auch eine Schwalbenschwanzführung.

Die Erfindung betrifft auch eine elektrische Verbindungseinrichtung beinhaltend wenigstens eine oben beschriebene lösbare formschlüssige Verbindung, wobei die elektrische Verbindungseinrichtung wenigstens eine lösbare elektrische Verbindung umfasst, bei welcher an dem ersten Körper elektrische Kontakte und an dem zweiten Körper elektrische Gegenkontakte derart angeordnet sind, dass im Laufe der Montage der lösbaren formschlüssigen Verbindung und spätestens bei Erreichen der MontageEndposition die elektrischen Kontakte in elektrisch leitenden Kontakt mit den Gegenkontakten treten. Dies hat dann den Vorteil, dass mit der Montage der lösbaren formschlüssigen Verbindung zugleich auch die lösbare elektrische Verbindung zustande kommt, was einen breiten Einsatzbereich der elektrischen Verbindungseinrichtung mit sich bringt.

Die Erfindung bezieht sich auch auf eine Magnetventileinrichtung beinhaltend wenigstens eine oben beschriebene elektrische Verbindungseinrichtung, wobei die Magnetventileinrichtung einen Magnetventilblock mit wenigstens einem darin aufgenommenen Magnetventil und ein elektronisches Steuergerät umfasst, wobei der erste Körper durch eine an einem Magnetventilblock lösbar befestigte Niederhalterplatte gebildet wird, welche das wenigstens eine Magnetventil in einer Aufnahmeöffnung des Magnetventilblocks niederhält, der zweite Körper durch eine elektrische Kontaktplatte und der dritte Körper durch den Magnetventilblock, wobei die elektrischen Kontakte mit dem wenigstens einen Magnetventil und die elektrischen Gegenkontakte mit Signalleitungen elektrisch verbunden sind, in welche von dem elektronischen Steuergerät Steuersignale für das wenigstens eine Magnetventil eingesteuert werden.

Mit anderen Worten hat dann die Niederhalteplatte eine vorteilhafte Doppelfunktion, indem sie einerseits das wenigstens eine Magnetventil in einer Öffnung des Magnetventilblocks niederhält und andererseits einen Teil der Längsführung bzw. der elektrischen Verbindungseinrichtung ausbildet.

Bevorzugt ist das wenigstens eine separate Sicherungselement durch die wenigstens eine erste Öffnung der Niederhalteplatte hindurchragt und in der wenigstens einen dritten Öffnung des Magnetventilblock lösbar gehalten.

Wenn zusätzlich dann noch die Niederhalteplatte durch das wenigstens eine separate Sicherungselement, insbesondere die Kopfschraube an dem Magnetventilblock lösbar gehalten ist, dann übt auch das wenigstens eine separate Sicherungselement bzw. die wenigstens eine Kopfschraube eine vorteilhafte Doppelfunktion aus, indem es bzw. sie einerseits die Niederhalteplatte an dem Magnetventilblock lösbar hält und andererseits den Formschluss der lösbaren formschlüssigen Verbindung sicherstellt.

Die Erfindung beinhaltet eine elektropneumatische Einrichtung eines Fahrzeugs beinhaltend wenigstens eine oben beschriebene Magnetventileinrichtung, beispielsweise eine elektropneumatische Betriebsbremseinrichtung, elektropneumatische Parkbremseinrichtung oder eine elektropneumatische Luftfederungseinrichtung eines Fahrzeugs.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine perspektivische Ansicht einer Magnetventileinrichtung einer elektropneumatischen Betriebsbremseinrichtung eines Fahrzeugs gemäß einer bevorzugten Ausführungsform der Erfindung;
- Fig.2: eine perspektivische Ansicht einer Montage einer elektrischen Verbindungseinrichtung der Magnetventileinrichtung von Fig.1;
- Fig.2A: eine Querschnittsansicht der Montagesituation von Fig.2 in einer ersten Montagephase;
- Fig.2B: eine Querschnittsansicht der Montagesituation von Fig.2 in einer zweiten Montagephase;
- Fig.3: eine perspektivische Ansicht einer Demontage der elektrischen Verbindungseinrichtung der Magnetventileinrichtung von Fig.1;
- Fig.4: eine untere Ansicht der elektrischen Verbindungseinrichtung der Magnetventileinrichtung von Fig.1;
- Fig.5: eine perspektivische untere Ansicht der Montagesituation von Fig.2 in der ersten Montagephase.

### Beschreibung des Ausführungsbeispiels

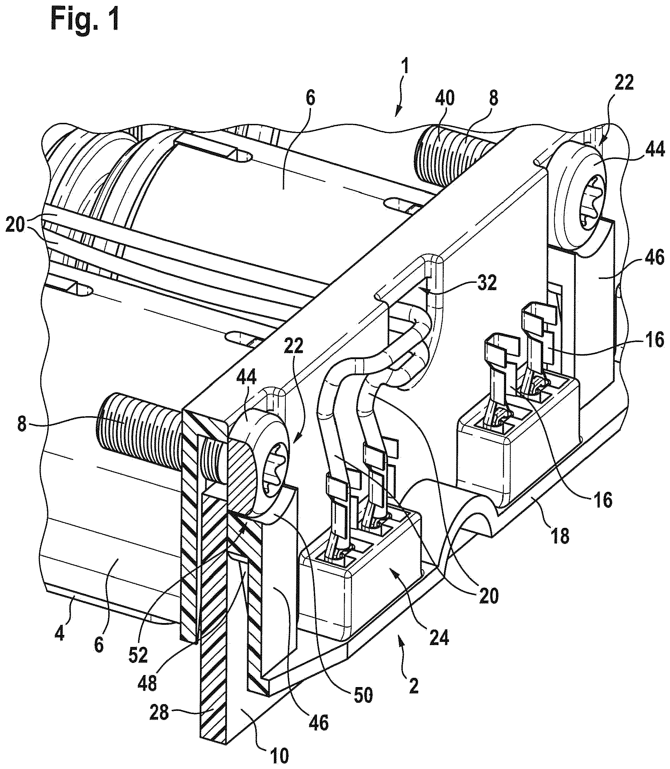

Fig. 1 stellt eine perspektivische Ansicht einer Magnetventileinrichtung 1 einer elektropneumatischen Betriebsbremseinrichtung eines Fahrzeugs gemäß einer bevorzugten Ausführungsform der Erfindung dar.

Die Magnetventileinrichtung 1 beinhaltet eine elektrische Verbindungseinrichtung 2 sowie einen Magnetventilblock 4 mit darin in Aufnahmeöffnungen aufgenommenen Magnetventilen 6 und ein hier nicht gezeigtes elektronisches Steuergerät. Von dem Magnetventilblock 4 sind hier aus Übersichtlichkeitsgründen lediglich die Magnetventile 6 gezeigt, welche in Aufnahmeöffnungen des Magnetventilblocks 4 aufgenommen sind.

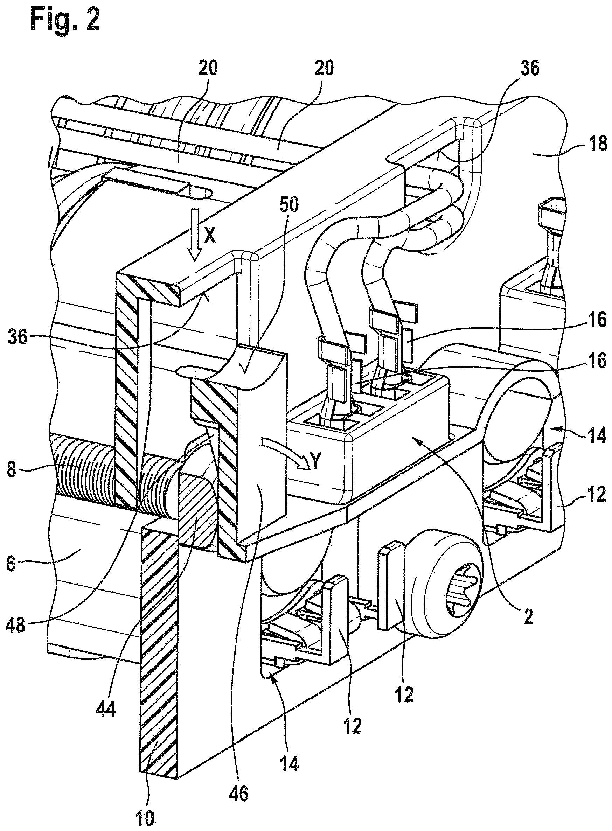

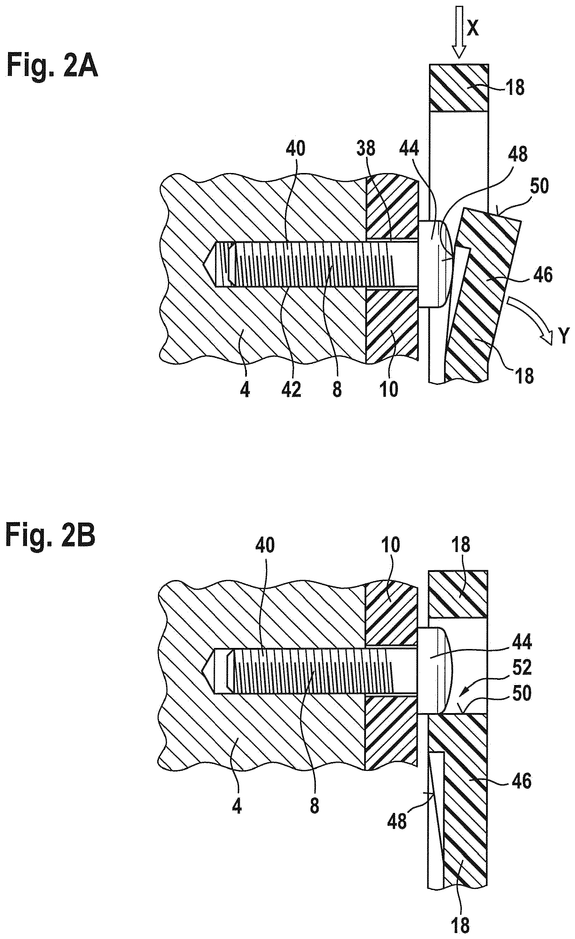

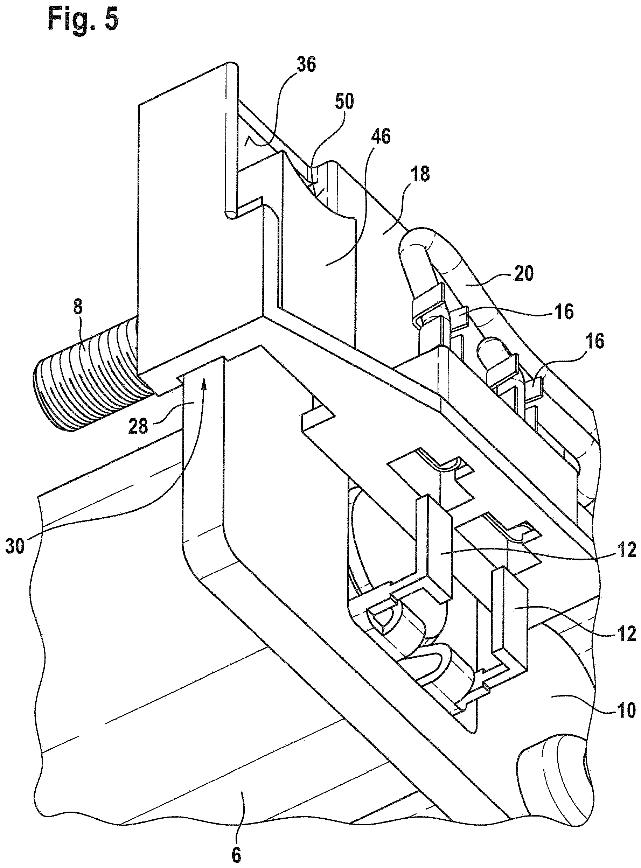

Eine an dem Magnetventilblock 4 bevorzugt mittels Kopfschrauben 8 lösbar befestigte Niederhalterplatte hält die Magnetventile 6 in den jeweils zugeordneten Aufnahmeöffnungen des Magnetventilblocks 4 nieder. Wie am besten aus Fig.2 und **Fig.5** ersichtlich, ragen elektrische Kontakte 12 der Magnetventile 6 durch Durchgangsöffnungen 14 der Niederhalteplatte 10 hindurch nach draußen und werden dort von Gegenkontakten 16 elektrisch kontaktiert, welche an einer separaten hier beispielsweise ebenfalls plattenförmigen Kontaktleiste 18 angeordnet sind. Die elektrischen Kontakte 12 der Magnetventile 6 sind beispielsweise endseitig gekröpft und bilden jeweils einen männlichen Teil aus. Demgegenüber sind die elektrischen Gegenkontakte 16 beispielsweise als weibliche Buchsen ausgebildet, welche mit den elektrischen Kontakten 12 in Flucht liegen und in welche dann die elektrischen Kontakte 12 eingesteckt werden können, wodurch eine lösbare elektrische Verbindung 24 zustande kommt. Natürlich können die männlichen elektrischen Kontakte auch an der Kontaktleiste und die weiblichen Buchsen als elektrische Gegenkontakte auch an den Magnetventilen 6 angeordnet sein.

Die in **Fig.2** und **Fig.5** gezeigte Situation bezieht sich auf einen Zustand, in welchem die elektrischen Verbindungen zwischen den elektrischen Kontakten 12 und Gegenkontakten 16 aber noch nicht zustande gekommen sind. Die elektrischen Kontakte 12 und die elektrischen Gegenkontakte 16 sind Bestandteile der elektrischen Verbindungseinrichtung 2.

Die elektrischen Gegenkontakte 16 sind mit Signalleitungen 20 elektrisch verbunden, in welche von dem elektronischen Steuergerät Steuersignale für die Magnetventile 6 eingesteuert werden. Durch die elektrische Verbindungseinrichtung sind daher die Magnetventile 6 mit dem elektronischen Steuergerät verbunden. Die Magnetventile 6 steuern abhängig von den elektrischen Steuersignalen pneumatische Drücke innerhalb der elektropneumatischen Betriebsbremseinrichtung.

Die elektrische Verbindungseinrichtung 2 beinhaltet weiterhin eine lösbare formschlüssige Verbindung 22 zwischen der Niederhalterplatte 10 und der Kontaktleiste 18, wobei bei der Montage der formschlüssigen Verbindung 22 zugleich auch die lösbare elektrische Verbindung 24 zwischen den elektrischen Kontakten 12 und den elektrischen Gegenkontakten 16 zustande kommt bzw. bei der Demontage der formschlüssigen Verbindung 22 zugleich auch die lösbare elektrische Verbindung 24 zwischen den elektrischen Kontakten 12 und den elektrischen Gegenkontakten 16 gelöst wird.

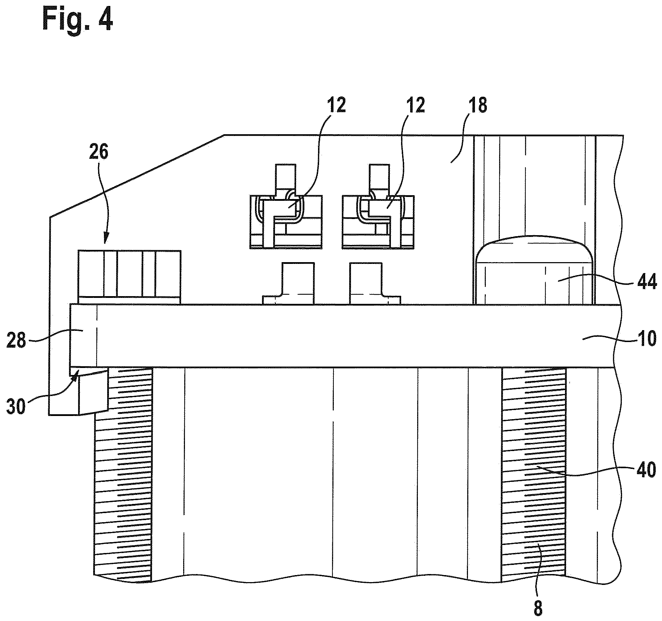

Basis der lösbaren formschlüssigen Verbindung 22 zwischen der Niederhalterplatte 10 und der Kontaktleiste 18 bildet eine Linearführung 26 zwischen der Niederhalterplatte 10 und der Kontaktleiste 18 hier beispielsweise in Form einer am besten anhand von **Fig.4** sichtbaren Nutführung, bei welcher jeweils ein Rand 28 der Niederhalterplatte 10 in jeweils einer Nut 30 der Kontaktleiste 18 derart geführt ist, dass die Kontaktleiste 18 gegenüber der Niederhalteplatte 10 parallel zu den Plattenebenen von Niederhalteplatte 10 und plattenförmiger Kontaktleiste 18 geführt ist. Die noch lose Kontaktleiste 18 kann dann insbesondere bezogen auf die Darstellung von **Fig.1** von oben her auf die Niederhalteplatte 10 unter Einfädeln ihrer beiden Ränder 28 in die zugeordneten Nuten 30 der Kontaktleiste 18 aufgesetzt und dann entlang der Linearführung 26 nach unten verschoben werden, bis eine Anschlagposition als Konter-Anschlag 32 erreicht ist, in welcher ein oberer Rand 34 der Niederhalteplatte 10 von unten her an einer oberen Fläche 36 der Kontaktleiste anschlägt, wie anhand von **Fig.1** und **Fig.5** leicht vorstellbar ist. Die elektrischen Kontakte 12 und Gegenkontakte 16 bewegen sich dann in einer Ebene parallel zur Linearführung 26.

In der Niederhalteplatte 10 sind Durchgangsbohrungen als erste Öffnungen 38 vorhanden, durch welche Schraubenschäfte 40 der Kopfschrauben 8 durchgesteckt sind, welche in Gewindebohrungen des Magnetventilblocks 4 als dritte Öffnungen 42 lösbar eingeschraubt sind und so die Niederhalteplatte 10 am Magnetventilblock 4 und damit auch die Magnetventile 6 in ihren Aufnahmeöffnungen im Magnetventilblock 4 fixieren. Die Schraubköpfe 44 ragen dabei aus den ersten Öffnungen heraus und von der zur Kontaktleiste 18 gerichteten Seitenfläche der Niederhalteplatte 10 hervor. Die ersten Öffnungen 38 in der Niederhalteplatte 10 fluchten dabei mit den dritten Öffnungen 42 im Magnetventilblock 4.

Wie am besten anhand von **Fig.2** sichtbar, sind in der Wandung der Kontaktleiste 18 in Richtung der Längsachsen der Kopfschrauben 8 elastisch verformbare Finger oder Laschen 46 ausgebildet, welche beispielsweise einstückig mit der Kontaktleiste 18 als Spritzgussformling aus Kunststoff gefertigt sind. Dabei ist jeweils ein Ende eines Fingers oder einer Lasche 46 mit der Wandung der Kontaktleiste verbunden und das andere Ende stellt ein freies Ende dar.

Wie **Fig.1**, **Fig.2**, **Fig.2A** und **Fig.3** zeigen, sind die zur Niederhalteplatte 10 weisenden Flächen der Finger 46 jeweils mit einer Rampenfläche 48 versehen, die in Montagerichtung gesehen ansteigt, so dass, wenn im Rahmen einer ersten Montagephase die Kontaktleiste 18 von oben her auf die Niederhalteplatte 10 aufgesetzt und dadurch die Linearführung 26 etabliert wird, wie der Pfeil X andeutet, die Schraubenköpfe 44 die Rampenfläche 48 kontaktieren und mit fortschreitender Bewegung der Kontaktleiste 18 entlang der Linearführung 26 die Finger 46 dann von den Schraubenköpfen 44 in Richtung des Pfeils Y elastisch verformt und insbesondere von der Niederhalteplatte 10 weg gebogen werden. Wie **Fig.5** zeigt, greifen beispielsweise im Laufe dieser ersten Montagephase die elektrischen Kontakte 12 der Magnetventile 6 in die fluchtenden elektrischen Gegenkontakte 16 an der Kontaktleiste 18 ein, so dass dadurch auch die elektrischen Verbindungen 24 zwischen den elektrischen Kontakten 12 und den elektrischen Gegenkontakten 16 zustande kommen. Die elastisch verformbaren Finger 46 weisen an ihren freien Enden Anschlagflächen 50 für die Schraubenköpfe 44 der Kopfschrauben 8 auf.

Wenn dann die Montageendposition der Kontaktleiste 18 auf der Niederhalteplatte 10 innerhalb einer zweiten Montagephase erreicht ist, und der obere Rand 34 der Niederhalteplatte 10 von unten her an der oberen Fläche 36 der Kontaktleiste 18 angeschlagen ist, dann haben die Schraubenköpfe 44 die endseitigen Anschlagflächen 50 der Finger passiert, wodurch die Finger 46 der Kontaktleiste 18 infolge ihrer Elastizität wieder in ihre gerade Ausgangslage zurückschnappen und dann jeweils die Anschlagflächen 50 der Finger 46 in Richtung der Linearführung 26 gesehen hintergreifen, wie **Fig.2B** zeigt. Durch die Anschlagflächen 50 wird ein Anschlag 52 für die Kontaktleiste 18 gebildet, der verhindert, dass die Kontaktleiste 18 von der Niederhalteplatte 10 entlang der Linearführung 26 nach oben abgezogen wird.

Durch dann einerseits die an den Anschlagflächen 50 der Finger 46 anschlagenden Schraubenköpfe 44 als Anschlag 52 und andererseits den von unten her an der oberen Fläche 36 der Kontaktleiste 18 anschlagenden oberen Rand 34 der Niederhalteplatte 10 als Konter-Anschlag 32 wird dann die Kontaktleiste 18 an der Niederhalteplatte 10 lösbar formschlüssig gehalten.

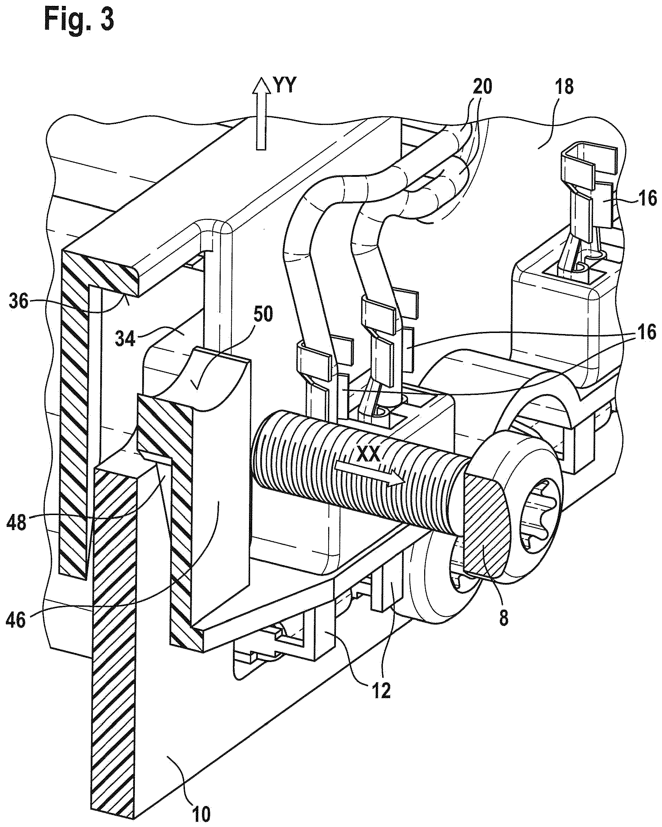

Zur Demontage der lösbaren formschlüssigen Verbindung 22 zwischen der Kontaktleiste 18 und der Niederhalteplatte 10 werden die Kopfschrauben 8 aus den ersten Öffnungen 38 und dritten Öffnungen 42 heraus gelöst, wie in **Fig.3** durch den Pfeil XX angedeutet ist. Dann sind die Anschlagflächen 50 der Finger 46 nicht mehr durch die Schraubenköpfe gekontert bzw. hintergriffen, so dass dann die Kontaktleiste 18 nach oben von der Niederhalteplatte 10 entlang der Linearführung 26 abgezogen werden kann, wie der Pfeil YY in **Fig.3** andeutet. Wie ebenfalls anhand von **Fig.3** vorstellbar ist, kommen dann auch die elektrischen Kontakte 12 der Magnetventile 6 außer Eingriff mit den elektrischen Gegenkontakten 16 an der Kontaktleiste 18, so dass dann auch die elektrischen Verbindungen 24 automatisch gelöst werden.

### Bezugszeichenliste

- 1: Magnetventileinrichtung
- 2: elektrische Verbindungseinrichtung
- 4: Magnetventilblock
- 6: Magnetventile
- 8: Kopfschrauben
- 10: Niederhalteplatte
- 12: elektrische Kontakte
- 14: Durchgangsöffnungen
- 16: elektrische Gegenkontakte
- 18: Kontaktleiste
- 20: Signalleitungen
- 22: formschlüssige Verbindung
- 24: elektrische Verbindungen
- 26: Linearführung
- 28: Rand
- 30: Nut
- 32: Konter-Anschlag
- 34: oberer Rand
- 36: obere Fläche
- 38: erste Öffnungen
- 40: Schraubenschäfte
- 42: dritte Öffnungen
- 44: Schraubenköpfe
- 46: Finger
- 48: Rampenfläche
- 50: Anschlagfläche
- 52: Anschlag
- X: Pfeil
- Y: Pfeil
- XX: Pfeil
- YY: Pfeil

## Patentansprüche

1. Lösbare formschlüssige Verbindung (22) zwischen einem ersten Körper (10) und einem zweiten Körper (18), welche wenigstens Folgendes beinhaltet:
a) Eine Linearführung (26) zwischen dem ersten Körper (10) und dem zweiten Körper (18), wobei die Linearführung (26) in Eingriff und außer Eingriff bringbar ist,
b) wenigstens ein separates Sicherungselement (8), welches mit seinem einen Ende (40) in wenigstens einer ersten Öffnung (38) in dem ersten Körper (10) und/oder in wenigstens einer dritten Öffnung (42) in einem dritten Körper (4) derart lösbar befestigt ist, dass das Sicherungselement mit seinem anderen Ende (44) aus der ersten Öffnung (38) herausragt, und
c) wenigstens ein in Richtung der Längsachse des separaten Sicherungselements (8) durch das andere Ende (44) des separaten Sicherungselements (8) elastisch verformbarer Abschnitt (46) des zweiten Körpers (18), welcher mit einer Anschlagfläche (50) versehen ist, gegen welche in Richtung der Linearführung (26) gesehen das andere Ende (44) des separaten Sicherungselements (8) anschlagbar ist, wobei
d) der wenigstens eine elastisch verformbare Abschnitt (46) und das wenigstens eine separate Sicherungselement (8) derart angeordnet sind und miteinander zusammen wirken, dass
e) zur Montage der lösbaren formschlüssigen Verbindung (22)
e1) zunächst die Linearführung (26) zwischen dem ersten Körper (10) und dem zweiten Körper (18) in Eingriff gebracht, und dann
e2) in einer ersten Montagephase der erste Körper (10) relativ zum zweiten Körper (18) entlang der Linearführung (26) in einer Montagerichtung linear geführt wird, wobei der elastisch verformbare Abschnitt (46) von dem aus der ersten Öffnung (38) herausragenden anderen Ende (44) des separaten Sicherungselements (8) kontaktiert und in Richtung der Längsachse des separaten Sicherungselements (8) elastisch verformt wird, solange bis
e3) in einer zweiten Montagephase eine Montage-Endposition erreicht ist, in welcher das andere Ende (44) des separaten Sicherungselements (8) die Anschlagfläche (50) passiert hat und dadurch der elastische Abschnitt (46) zurückfedert sowie das andere Ende (44) des separaten Sicherungselements (8) die Anschlagfläche (50) in Richtung der Linearführung (26) gesehen formschlüssig hintergreift und dadurch einen Anschlag (52) ausbildet, und dass
f) zur Demontage der lösbaren formschlüssigen Verbindung (22)
f1) zunächst das wenigstens eine separate Sicherungselement (8) aus der wenigstens einen ersten Öffnung (38) und/oder aus der wenigstens einen dritten Öffnung (42) herausgelöst wird, und dann
f2) der erste Körper (10) gegenüber dem zweiten Körper (18) entlang der Linearführung (26) in einer der Montagerichtung entgegen gesetzten Demontagerichtung solange linear geführt wird, bis die Linearführung (26) zwischen dem der ersten Körper (10) und dem zweiten Körper (18) außer Eingriff gerät.

2. Lösbare formschlüssige Verbindung nach Anspruch 1, **dadurch gekennzeichnet, dass** ein Konter-Anschlag (32) zwischen dem ersten Körper (10) und dem zweiten Körper (18) vorgesehen ist, welcher in der MontageEndposition zustande kommt und eine Bewegung des anderen Endes (44) des separaten Sicherungselements (8) von der Anschlagfläche (50) weg verhindert.

3. Lösbare formschlüssige Verbindung nach Anspruch 1 oder 2, **dadurch gekennzeichnet, dass** der elastisch verformbare Abschnitt (46) als elastisch verformbare Lasche oder als elastisch verformbarer Finger ausgebildet ist, an deren oder an dessen freiem Ende die Anschlagfläche (50) ausgebildet ist.

4. Lösbare formschlüssige Verbindung nach Anspruch 3, **dadurch gekennzeichnet, dass** die elastisch verformbare Lasche oder der elastisch verformbare Finger (46) zusammen mit dem zweiten Körper (18) als einstückiger Kunststoff-Spritzgussformling ausgebildet ist.

5. Lösbare formschlüssige Verbindung nach Anspruch 3 oder 4, **dadurch gekennzeichnet, dass** die Lasche oder der Finger (46) des zweiten Körpers (18) mit einer im Querschnitt gesehen als Rampenfläche (48) ausbildeten Kontaktfläche versehen ist, wobei im Laufe der ersten Montagephase das andere Ende (44) des separaten Sicherungselements (8) entlang der ansteigenden Rampenfläche (48) läuft und dadurch der Finger oder die Lasche (46) von dem anderen Ende (44) des separaten Sicherungselements (8) in Richtung der Längsachse des separaten Sicherungselements (8) elastisch verformt wird.

6. Lösbare formschlüssige Verbindung nach einem der vorhergehenden Ansprüche, **dadurch gekennzeichnet, dass** das wenigstens eine separate Sicherungselement (8) als Kopfschraube mit einem Schraubenkopf (44) und einem Schraubenschaft (40) ausgebildet ist, wobei das eine Ende (40) des separaten Sicherungselements durch den Schraubenschaft gebildet wird, welcher bei der Montage mit einem Innengewinde der ersten Öffnung (38) und/oder der dritten Öffnung 42) verschraubt ist und das andere Ende (44) des separaten Sicherungselements (8) durch den Schraubenkopf.

7. Lösbare formschlüssige Verbindung nach einem der vorhergehenden Ansprüche, **dadurch gekennzeichnet, dass** die Linearführung (26) zwischen dem ersten Körper (10) und dem zweiten Körper(18) wenigstens eine Führungsnut (30) und wenigstens einen in die Führungsnut (30) eingreifenden Führungskörper (28) beinhaltet, wobei die wenigstens eine Führungsnut (30) an dem zweiten Körper (18) und der wenigstens eine Führungskörper (28) an dem ersten Körper (10) oder die wenigstens eine Führungsnut an dem ersten Körper (10) und der wenigstens eine Führungskörper an dem zweiten Körper (18) ausgebildet ist.

8. Elektrische Verbindungseinrichtung (2) beinhaltend wenigstens eine lösbare formschlüssige Verbindung (22) nach einem der vorhergehenden Ansprüche, **dadurch gekennzeichnet, dass** die elektrische Verbindungseinrichtung (2) wenigstens eine lösbare elektrische Verbindung (24) umfasst, bei welcher an dem ersten Körper (10) oder an dem dritten Körper (4) elektrische Kontakte (12) und an dem zweiten Körper (18) elektrische Gegenkontakte (16) derart in Flucht zueinander angeordnet sind, dass im Laufe der Montage der lösbaren formschlüssigen Verbindung (22) und spätestens bei Erreichen der MontageEndposition die elektrischen Kontakte (12) in elektrisch leitenden Kontakt mit den Gegenkontakten (16) treten.

9. Magnetventileinrichtung (1) beinhaltend wenigstens eine elektrische Verbindungseinrichtung (2) nach Anspruch 8, **dadurch gekennzeichnet, dass** die Magnetventileinrichtung (1) einen Magnetventilblock (4) mit wenigstens einem darin aufgenommenen Magnetventil (6) und ein elektronisches Steuergerät umfasst, wobei der erste Körper (10) durch eine an einem Magnetventilblock (4) lösbar befestigte Niederhalterplatte (10), welche das wenigstens eine Magnetventil (6) in einer Aufnahmeöffnung des Magnetventilblocks (4) niederhält, der zweite Körper (18) durch eine elektrische Kontaktplatte und der dritte Körper durch den Magnetventilblock (4) gebildet wird, wobei die elektrischen Kontakte (12) mit dem wenigstens einen Magnetventil (6) und die elektrischen Gegenkontakte (16) mit Signalleitungen (20) elektrisch verbunden sind, in welche von dem elektronischen Steuergerät Steuersignale für das wenigstens eine Magnetventil (6) eingesteuert werden.

10. Magnetventileinrichtung nach Anspruch 9, **dadurch gekennzeichnet, dass** die Niederhalteplatte (10) durch das wenigstens eine separate Sicherungselement (8) an dem Magnetventilblock (4) lösbar gehalten ist.

11. Magnetventileinrichtung nach Anspruch 10, **dadurch gekennzeichnet, dass** das wenigstens eine separate Sicherungselement (8) durch die wenigstens eine erste Öffnung (38) der Niederhalteplatte (10) hindurchragt und in der wenigstens einen dritten Öffnung (42) des Magnetventilblocks (4) lösbar gehalten ist.

12. Elektropneumatische Einrichtung eines Fahrzeugs beinhaltend wenigstens eine Magnetventileinrichtung (1) nach einem der Ansprüche 9 bis 11.

## Claims

1. A releasable positively locking connection (22) between a first body (10) and a second body (18), which connection (22) comprises at least the following:
a) a linear guide (26) between the first body (10) and the second body (18), it being possible for the linear guide (26) to be brought into and out of engagement,
b) at least one separate securing element (8) which is fastened releasably by way of its one end (40) in at least one first opening (38) in the first body (10) and/or in at least one third opening (42) in a third body (4), in such a way that the securing element protrudes with its other end (44) out of the first opening (38), and
c) at least one section (46) of the second body (18), which section (46) can be deformed elastically by way of the other end (44) of the separate securing element (8) in the direction of the longitudinal axis of the separate securing element (8) and is provided with a stop face (50), with which, as viewed in the direction of the linear guide (26), the other end (44) of the separate securing element (8) can come into contact,
d) the at least one elastically deformable section (46) and the at least one separate securing element (8) being arranged and interacting with one another in such a way that,
e) in order to assemble the releasable positively locking connection (22),
e1) first of all the linear guide (26) is brought into engagement between the first body (10) and the second body (18), and then,
e2) in a first assembly phase, the first body (10) is guided in a linear manner in an assembly direction along the linear guide (26) relative to the second body (18), the elastically deformable section (46) being contacted by that other end (44) of the separate securing element (8) which protrudes out of the first opening (38), and being deformed elastically in the direction of the longitudinal axis of the separate securing element (8), until,
e3) in a second assembly phase, an assembly end position is reached, in which the other end (44) of the separate securing element (8) has passed the stop face (50) and, as a result, the elastic section (46) springs back, and the other end (44) of the separate securing element (8) engages in a positively locking manner behind the stop face (50) as viewed in the direction of the linear guide (26) and, as a result, configures a stop (52), and in such a way that,
f) in order to dismantle the releasable positively locking connection (22),
f1) first of all the at least one separate securing element (8) is released from the at least one first opening (38) and/or from the at least one third opening (42), and then
f2) the first body (10) is moved in a linear manner along the linear guide (26) with respect to the second body (18) in a dismantling direction which is opposed to the assembly direction, until the linear guide (26) passes out of engagement between the first body (10) and the second body (18).

2. The releasable positively locking connection as claimed in claim 1, **characterized in that** a counterstop (32) is provided between the first body (10) and the second body (18), which counterstop (32) is produced in the assembly end position and prevents a movement of the other end (44) of the separate securing element (8) away from the stop face (50).

3. The releasable positively locking connection as claimed in claim 1 or 2, **characterized in that** the elastically deformable section (46) is configured as an elastically deformable tongue or as an elastically deformable finger, at the free end of which the stop face (50) is configured.

4. The releasable positively locking connection as claimed in claim 3, **characterized in that** the elastically deformable tongue or the elastically deformable finger (46) is configured together with the second body (18) as a single-piece plastic injection molded product.

5. The releasable positively locking connection as claimed in claim 3 or 4, **characterized in that** the tongue or the finger (46) of the second body (18) is provided with a contact face which is configured as a ramp face (48) as viewed in cross section, the other end (44) of the separate securing element (8) running along the rising ramp face (48) in the course of the first assembly phase and, as a result, the finger or the tongue (46) being deformed elastically by the other end (44) of the separate securing element (8) in the direction of the longitudinal axis of the separate securing element (8).

6. The releasable positively locking connection as claimed in one of the preceding claims, **characterized in that** the at least one separate securing element (8) is configured as a headed screw with a screw head (44) and a screw shank (40), the one end (40) of the separate securing element being formed by way of the screw shank which, in the case of the assembly, is screwed to an internal thread of the first opening (38) and/or the third opening (42), and the other end (44) of the separate securing element (8) being formed by way of the screw head.

7. The releasable positively locking connection as claimed in one of the preceding claims, **characterized in that** the linear guide (26) has, between the first body (10) and the second body (18), at least one guide groove (30) and at least one guide body (28) which engages into the guide groove (30), the at least one guide groove (30) being configured on the second body (18) and the at least one guide body (28) being configured on the first body (10), or the at least one guide groove being configured on the first body (10) and the at least one guide body being configured on the second body (18).

8. An electric connecting device (2) comprising at least one releasable positively locking connection (22) as claimed in one of the preceding claims, **characterized in that** the electric connecting device (2) comprises at least one releasable electric connection (24), in the case of which electric contacts (12) on the first body (10) or on the third body (4) and electric countercontacts (16) on the second body (18) are arranged in alignment with respect to one another in such a way that, in the course of the assembly of the releasable positively locking connection (22) and at the latest in the case of the assembly end position being reached, the electric contacts (12) pass into electrically conducting contact with the countercontacts (16).

9. A solenoid valve device (1) comprising at least one electric connecting device (2) as claimed in claim 8, **characterized in that** the solenoid valve device (1) comprises a solenoid valve block (4) with at least one solenoid valve (6) received therein and an electronic control unit, the first body (10) being formed by way of a hold-down plate (10) which is fastened releasably to a solenoid valve block (4) and holds the at least one solenoid valve (6) down in a receiving opening of the solenoid valve block (4), the second body (18) being formed by way of an electric contact plate, and the third body being formed by way of the solenoid valve block (4), the electric contacts (12) being connected electrically to the at least one solenoid valve (6), and the electric countercontacts (16) being connected electrically to signal lines (20), into which control signals for the at least one solenoid valve (6) are input in a controlled manner by the electronic control unit.

10. The solenoid valve device as claimed in claim 9, **characterized in that** the hold-down plate (10) is held releasably on the solenoid valve block (4) by way of the at least one separate securing element (8).

11. The solenoid valve device as claimed in claim 10, **characterized in that** the at least one separate securing element (8) protrudes through the at least one first opening (38) of the hold-down plate (10) and is held releasably in the at least one third opening (42) of the solenoid valve block (4).

12. An electropneumatic device of a vehicle comprising at least one solenoid valve device (1) as claimed in one of claims 9 to 11.

## Revendications

1. Liaison (22) détachable par complémentarité de forme entre un premier corps (10) et un deuxième corps (18), qui comporte au moins ce qui suit :
a) un guidage (26) linéaire entre le premier (10) et le deuxième corps (18), le guidage (26) linéaire pouvant être mis en prise et hors de prise,
b) au moins un élément (8) distinct de sécurité, qui est fixé de manière amovible par l'une de ses extrémités (40) dans au moins une première ouverture (38) du premier corps (10) et/ou dans au moins une troisième ouverture (42) d'un troisième corps (4), de manière à ce que l'élément de sécurité dépasse par son autre extrémité (44) de la première ouverture (38), et
c) au moins une partie (46), déformable élastiquement par l'autre extrémité (44) de l'élément (8) distinct de sécurité dans la direction longitudinale de l'élément (8) distinct de sécurité, du deuxième corps (18), laquelle est pourvue d'une surface (50) de butée sur laquelle, considéré dans la direction du guidage (26) linéaire, l'autre extrémité (44) de l'élément (8) distinct de sécurité peut buter, dans laquelle
d) la au moins une partie (46) déformable élastiquement et le au moins un élément (8) distinct de sécurité sont disposés et coopèrent entre eux, de manière à ce que
e) pour le montage de la liaison (22) détachable par complémentarité de forme
e1) on met d'abord en prise le guidage (26) linéaire entre le premier corps (10) et le deuxième corps (18), et ensuite
e2) dans une première phase de montage, on guide linéairement, dans un sens de montage, le premier corps (10) par rapport au deuxième corps (18) le long du guidage (26) linéaire, dans laquelle on met en contact avec l'autre extrémité (44), sortant de la première ouverture (38) de l'élément (8) distinct de sécurité et la partie (46) déformable élastiquement et on la déforme élastiquement dans la direction de l'axe longitudinal de l'élément (8) distinct de sécurité, jusqu'à ce que
e3) dans une deuxième phase de montage soit atteinte une position finale de montage, dans laquelle l'autre extrémité (44) de l'élément (8) distinct de sécurité ait passée la surface (50) de butée et ainsi la partie (46) élastique revienne élastiquement, tandis que l'autre extrémité (44) de l'élément (8) distinct de sécurité prend par l'arrière par complémentarité de forme considéré dans la direction du guidage (26) linéaire, la surface (50) de butée et constitue ainsi une butée (52), et en ce que
f) pour le démontage de la liaison (22) détachable par complémentarité de forme
f1) on sort d'abord le au moins un élément (8) distinct de sécurité de la au moins une première ouverture (38) et/ou de la au moins une troisième ouverture (42), et ensuite
f2) on guide linéairement le premier corps (10) par rapport au deuxième corps (18) le long du guidage (26) linéaire dans un sens de démontage contraire au sens de montage, jusqu'à ce que le guidage (26) linéaire entre le premier corps (10) et le deuxième corps (18) soit hors de prise.

2. Liaison détachable par complémentarité de forme suivant la revendication 1, **caractérisée en ce qu'**il est prévu entre le premier corps (10) et le deuxième corps (18) une contrebutée (32), qui se réalise dans la position finale de montage et qui empêche l'autre extrémité (44) de l'élément (8) distinct de sécurité de s'éloigner de la surface (50) de butée.

3. Liaison détachable par complémentarité de forme suivant la revendication 1 ou 2, **caractérisée en ce que** la partie (46) déformable élastiquement est constituée sous la forme d'une patte déformable élastiquement ou d'un doigt déformable élastiquement, à l'extrémité libre de laquelle ou duquel est constituée la surface (50) de butée.

4. Liaison détachable par complémentarité de forme suivant la revendication 3, **caractérisée en ce que** la patte déformable élastiquement ou le doigt (46) déformable élastiquement est constitué, ensemble avec le deuxième corps (18), sous la forme d'un produit en matière plastique moulé par injection d'une seule pièce.

5. Liaison détachable par complémentarité de forme suivant la revendication 3 ou 4, **caractérisée en ce que** la patte ou le doigt (46) du deuxième corps (18) est pourvu d'une surface de contact, configurée en vue en coupe transversale, sous la forme d'une surface (48) en rampe, dans laquelle, au cours de la première phase de montage, l'autre extrémité (44) de l'élément (8) distinct de sécurité court le long de la surface (48) en rampe ascendante et ainsi le doigt ou la patte (46) est déformé élastiquement en direction de l'axe longitudinal de l'élément (8) distinct de sécurité par l'autre extrémité (44) de l'élément (8) distinct de sécurité.

6. Liaison détachable par complémentarité de forme suivant l'une des revendications précédentes, **caractérisée en ce que** le au moins un élément (8) distinct de sécurité est constitué sous la forme d'une vis à tête ayant une tête (44) de vis et un fût (40) de vis, dans laquelle la une extrémité (40) de l'élément distinct de sécurité est formé par le fût (40) de la vis qui, lors du montage est vissé dans un taraudage de la première ouverture (38) et/ou de la troisième ouverture (42) et l'autre extrémité (44) de l'élément (8) distinct de sécurité est formée par la tête de la vis.

7. Liaison détachable par complémentarité de forme suivant l'une des revendications précédentes, **caractérisée en ce que** le guidage (26) linéaire entre le premier corps (10) et le deuxième corps (18) comporte au moins une rainure (30) de guidage et au moins un corps (28) de guidage pénétrant dans la rainure (30) de guidage, dans laquelle la au moins une rainure (30) de guidage est constituée sur le deuxième corps (18) et le au moins un corps (28) de guidage sur le premier corps (10) ou la au moins une rainure de guidage est constituée sur le premier corps (10) et le au moins un corps de guidage sur le deuxième corps (18).

8. Dispositif (2) électrique de liaison, comportant au moins une liaison (22) détachable par complémentarité de forme suivant l'une des revendications précédentes, **caractérisé en ce que** le dispositif (2) électrique de liaison comprend au moins une liaison (24) électriques détachable, dans laquelle des contacts (12) électrique sur le premier corps (10) et sur le troisième corps (4) et des contre-contacts (16) électriques sur le deuxième corps (18) sont alignés les uns par rapport aux autres, de manière à ce que, au cours du montage de la liaison (22) détachable par complémentarité de forme et au plus tard lorsqu'est atteinte la position finale de montage, les contacts (12) électrique entrent en contact conducteur de l'électricité avec les contre-contacts (16).

9. Dispositif (1) d'électrovanne, comportant au moins un dispositif (2) électrique de liaison suivant la revendication 8, **caractérisé en ce que** le dispositif (1) d'électrovanne comprend un bloc (4) d'électrovanne ayant au moins une électrovanne (6) qui y est reçue et un appareil électronique de commande, dans lequel le premier corps (10) est formé d'un plateau (10) de maintien fixé de manière détachable à un bloc (4) d'électrovanne, qui maintient la au moins une électrovanne (6), dans une ouverture de réception du bloc (4) d'électrovanne, le deuxième corps (18) étant formé par une plaque de contact électrique et le troisième corps par le bloc (4) d'électrovanne, dans lequel les contacts (12) électriques sont reliés électriquement à la au moins une électrovanne (6) et les contre-contacts (16) électriques à des lignes (20) de signal, dans lesquelles des signaux de commande de la au moins une électrovanne (6) sont envoyés par l'appareil électronique de commande.

10. Dispositif d'électrovanne suivant la revendication 9, **caractérisé en ce que** le plateau (10) de maintien est retenu de manière détachable au bloc (4) d'électrovanne par le au moins un élément (8) distinct de sécurité.

11. Dispositif d'électrovanne suivant la revendication 10, **caractérisé en ce que** le au moins un élément (8) distinct de sécurité passe dans la au moins une première ouverture (38) du plateau (10) de maintien et est retenu, de manière détachable, dans la au moins une troisième ouverture (42) du bloc (4) d'électrovanne.

12. Dispositif électropneumatique d'un véhicule comportant au moins un dispositif (1) d'électrovanne suivant l'une des revendications 9 à 11.
